# FASCICULE DE BREVET EUROPEEN

(11) **EP 3 691 879 B1**
(45) Date de publication et mention de la délivrance du brevet: **07.12.2022**
(21) Numéro de dépôt: 18804671.8
(22) Date de dépôt: 28.09.2018
(51) Int. Cl.: B29C 70/46, B29C 70/20, F02K 1/48

(54) **REALISATION EN MATERIAU COMPOSITE D'UNE STRUCTURE A LOBES DE MELANGEUR DE FLUX**
HERSTELLUNG EINER LAPPENSTRUKTUR EINES STRÖMUNGSMISCHERS AUS EINEM VERBUNDSTOFF
PRODUCTION IN COMPOSITE MATERIAL OF A LOBED STRUCTURE OF A FLOW MIXER

(30) Priorité: 03.10.2017 FR 1759244
(43) Date de publication de la demande: 12.08.2020
(73) Titulaire: Safran Ceramics, 33185 Le Haillan (FR)
(72) Inventeur: BOUCHY, Gaël, 77550 Moissy-Cramayel (FR); PHILIPPE, Eric, 77550 Moissy-Cramayel (FR)
(74) Mandataire: Ernest Gutmann - Yves Plasseraud S.A.S.
(86) Numéro de dépôt international: PCT/FR2018/052395
(87) Numéro de publication internationale: WO 2019/068996

(56) Documents cités:
- WO-A1-2012/046020
- DE-A1-102011 077 287
- FR-A1- 2 912 469
- US-A- 4 967 599
- US-A1- 2012 100 321

## Description

La présente invention concerne un procédé de réalisation en matériau composite d'une structure à lobes de mélangeur de flux de turbine à gaz circulant de l'amont vers l'aval.

Une telle structure s'appelle fréquemment « mélangeur » et a pour fonction de mélanger deux flux d'air issus du moteur pour aéronef concerné.

De façon traditionnelle et donc connue, la géométrie finale de la structure à lobes présente une jupe multilobée, c'est-à-dire comprend une partie formant une telle jupe, ayant une pluralité de lobes répartis autour d'un axe longitudinal de la structure à lobes.

Réaliser en matériau composite une pièce de forme aussi complexe qu'une structure à lobes de mélangeur de flux est problématique. En effet, la pièce à obtenir présentant des singularités géométriques du fait de sa forme, certaines zones sont inaccessibles à l'outillage de pose, tel que la tête d'un robot de pose de type AFP (procédé de placement de fibre automatisé) destiné à des composites complexes, fabriqués à partir de plusieurs couches de composite, ou pour une tête de couture ou encore pour l'implantation d'aiguilles.

A ce sujet, EP2118474 présente par exemple un procédé de drapage de secteurs qui dans un second temps sont assemblés entre eux par couture. FR 2912469 se réfère aussi à une telle réalisation. FR2912469 divulgue un procédé de fabrication d'une structure à lobes de mélangeur de flux de turbine à gaz ayant une partie amont annulaire prolongée vers l'aval par une partie formant jupe multilobée.

Pour permettre d'apporter une partie au moins de solution à la problématique posée, le procédé de l'invention propose:
- a) la réalisation d'une préforme fibreuse comprenant l'une parmi une résine thermo-formable et une résine thermodurcissable, dans une configuration géométrique intermédiaire essentiellement développable par post-formage vers la géométrie finale de la pièce à réaliser, la géométrie intermédiaire étant plus simple que ladite géométrie finale,
- b) au moins par exploitation du caractère thermo-formable ou thermodurcissable de la résine, post-former la configuration géométrique intermédiaire de révolution, en la déformant, pour lui faire atteindre la géométrie finale. L'invention est definie par la revendication 1.

« Essentiellement développable » par post-formage vers la géométrie finale de la pièce a pour sens « au moins en partie » développable par post-formage vers la géométrie finale, sur plus de 50% de la surface de la configuration géométrique intermédiaire. Ainsi, il se pourra que la configuration géométrique intermédiaire ne soit pas totalement développable vers la géométrie finale par le post-formage.

Par ailleurs, à l'étape a), si une résine thermodurcissable est utilisée, elle sera a priori dans un état pré-poussé, telle que mise en œuvre dans un pré-imprégné, c'est-à-dire à un état de polymérisation incomplet, de façon que la préforme fibreuse imprégnée de résine soit déformable.

Egalement a priori, la configuration géométrique intermédiaire sera de révolution. On pourrait toutefois imaginer appliquer le présent procédé de réalisation sur une plaque facile à réaliser (forme 2D) et à déformer vers des formes plus complexes (forme 3D).

De ce fait, il est subsidiairement proposé que soit prévue au moins une étape de génération de décadrages locaux (déformations locales d'une texture fibreuse lorsqu'on la déforme dans une nouvelle géométrie) de la configuration géométrique intermédiaire de la préforme fibreuse avant de la post-former, ou pendant qu'on la post-forme.

On préfèrera qu'il y en ait aussi peu que possible.

Dans le cas d'une résine thermo-formable utilisée à l'étape a), la résine sera favorablement fugitive (donc à capacité à se vaporiser sous haute température, typiquement une température inférieure à 900°C et de préférence à une température de 300°C à 400°C) ou soluble dans un solvant (eau ou autre), de sorte qu'elle disparaisse au moins essentiellement - typiquement à plus de 80% et encore de préférence à plus de 90% - avant la fin du procédé.

De façon à concilier les exigences d'une mise en œuvre industrielle en série et à coûts contenus avec l'atteinte de la précision de forme requise, il est aussi proposé qu'à l'étape b), l'exploitation du caractère thermo-formable ou thermodurcissable de la résine comprenne un chauffage de la préforme fibreuse, et une mise sous pression de ladite préforme fibreuse, après sa mise en contact avec un moule à la géométrie finale de la pièce à réaliser.

En prévoyant par ailleurs qu'avant sa mise en contact avec ledit moule à la géométrie finale de la pièce à réaliser, la réalisation de la préforme fibreuse s'opère sur un autre moule, on permettra d'adapter plus précisément la forme finale, de façon reproductible en grande série, sans altérer le plein intérêt du « premier moule » (dit « autre moule » ci-avant).

Une solution pertinente en liaison avec la réalisation de la préforme fibreuse propose aussi qu'à l'étape a), la préforme réalisée:
- comprend une partie amont annulaire qui s'évase vers l'aval,
- et/ou présente une forme qui s'évase, ceci sensiblement comme un pavillon de soubassophone (forme typiquement plus évasée qu'une extrémité aval en trompette).

Ainsi, on pourra produire une pièce développée de la forme à lobes du mélangeur à réaliser.

De fait, s'il n'y a pas de partie annulaire avant l'étape b), la pièce finale est plus facile à réaliser. On peut partir d'une géométrie de texture fibreuse plate que l'on peut mettre en forme avec de faibles décadrages. Avec la partie annulaire amont précitée, on doit partir d'une préforme de géométrie plus complexe à réaliser et à utiliser.

C'est une raison pour laquelle il est aussi proposé que la réalisation de la préforme à l'étape a) s'opère par un procédé AFP, qui prévoit d'appliquer un ruban de pré imprégné ou un ruban enduit d'un liant à l'aide d'une tête robotisée sur un moule à géométrie relativement simple.

En alternative ou complément, à l'étape a), la préforme fibreuse sera réalisée à partir de strates de fils enduits d'un liant ou pré-imprégnés (c'est-à-dire d'un complexe fibres + résine) appartenant à une texture multicouches ou à un tissu 2D, et cousue ou implantée d'aiguilles.

Pour réaliser les configurations géométriques successives des étapes a), puis b), on utilisera préférentiellement deux moules successifs, le premier - servant de support à la géométrie intermédiaire « simple », pour le robot AFP ou la tête de couture ou d'implantation d'aiguilles, par exemple - étant non multilobés, ou à multilobes notablement moins marqués que le second qui permettra de mouler la pièce à la géométrie finale désirée.

Dès lors qu'un moule sera utilisé pour l'étape b), comme précité, et qu'une configuration intermédiaire évasée aura été retenue, il est en outre proposé :
- que le moule à la géométrie finale de la pièce à réaliser soit défini de sorte qu'il soit multilobé en présentant ainsi, circonférentiellement, une succession de lobes, autour d'un axe (X-X) devant correspondre à l'axe de la structure à lobes, et
- que la configuration géométrique intermédiaire soit quant à elle définie de sorte qu'avec son s'évasement elle soit apte à être post-formée au contact de ce moule multilobé.

En liaison avec le premier moule précité, utilisé pour obtenir la configuration géométrique intermédiaire, il sera donc un moule à partie amont annulaire qui s'évase vers l'aval, et/ou présentant une forme évasée, ceci sensiblement comme un pavillon de soubassophone.

De la sorte, on aura adopté un compromis pertinent entre un processus de moulage et des configurations géométriques respectivement intermédiaire et finale.

Dans ce contexte, si la configuration géométrique intermédiaire n'est effectivement pas totalement développable vers la géométrie finale par post-formage, il est proposé que, dans ce cas, l'étape b) comprenne une étape de génération de décadrages locaux de ladite configuration géométrique intermédiaire de la préforme fibreuse avant de la post-former, ou pendant qu'on la post-forme.

Si par ailleurs, comme en l'espèce, on souhaite une structure de mélangeur de flux qui assure au mieux, une bonne conduction thermique, une résistance aux chocs thermiques, une haute rigidité, un poids limité, une bonne ductilité et/ou une résistance à la cassure, il est aussi proposé que le composite de la préforme fibreuse comprenne :
- des fibres contenant de l'alumine et une matrice d'alumine,
- ou des fibres contenant du carbone ou du carbure de silicium et une matrice en carbure.

Ainsi, on pourra obtenir une structure à lobes en CMC - composite à matrice céramique-.

### BREVE DESCRIPTION DES FIGURES

- les figures 1 à 3 montrent une préforme conforme à l'invention à forme sensiblement en pavillon de soubassophone, donc sans lobe ;
- la figure 4 montre un mélangeur de flux de turbine à gaz pour aéronef civil à structure à lobes ;
- la figure 5 est une alternative à la figure 1 ;
- la figure 6 montre une tuyère à flux confluents de turbomachine aéronautique à double flux pourvue du mélangeur de la figure 4 ;
- la figure 7 montre un premier moule simple pouvant être utilisé pour réaliser la préforme : étape a) ;
- la figure 8 montre une partie de second moule à lobes pour donner la forme finale à la préforme : étape b) ;
- la figure 9 montre une texture fibreuse à éléments à coudre
- et, figure 10, on retrouve les éléments cousus sur le mélangeur, à la géométrie finale, avec les lobes du mélangeur.

### DESCRIPTION DETAILLEE

Comme on l'a noté, un problème est ici de réaliser une pièce de forme complexe, en composite, de préférence en CMC. Egalement de préférence, les fibres de la préforme fibreuse seront déposées par le procédé AFP. Mais l'invention peut également être appliquée à des matériaux composites élaborés à partir de textures 2D ou multicouches, en une seule pièce par tissage tridimensionnel (3D), étant précisé que, la pièce à obtenir présentant des singularités géométriques, certaines zones sont inaccessibles pour la tête d'un robot AFP, ou une tête de couture ou encore une tête d'implantation d'aiguilles, rendant donc difficile, voire impossible, l'emploi direct de l'un de ces procédés pour obtenir la géométrie désirée.

Par «tissage bidimensionnel» ou « 2D », on entend ici un mode de tissage classique par lequel chaque fil de trame passe d'un côté à l'autre de fils d'une seule couche de chaîne ou inversement.

Le procédé selon l'invention peut être adapté pour permettre l'introduction d'une barbotine chargée dans des textures fibreuses 2D ayant une épaisseur d'au moins 0,5 mm, de préférence d'au moins 1 mm.

Avec une solution élaborée à partir de textures 2D, la structure fibreuse peut être obtenue par empilement de strates de fibres continues pouvant se présenter sous forme de couche(s) fibreuse(s) unidirectionnelle(s), tissu, tresse, tricot, feutre, nappes, notamment. Les strates peuvent être liées entre elles par exemple par couture, par implantation de fils ou d'éléments rigides ou par aiguilletage. WO2008104692 se réfère à la mise en œuvre de coutures ou d'implantation d'aiguilles et WO9706948 ou WO96006958 à l'implantation d'aiguilles appelées aussi épingles.

Par «tissage tridimensionnel» ou «tissage 3D» ou encore «tissage multicouche», on entend ici un mode de tissage par lequel certains au moins des fils de trame lient des fils de chaîne sur plusieurs couches de fils de chaîne ou inversement suivant un tissage correspondant à une armure de tissage qui peut être par exemple de type interlock, voire multi-toile, ou autre.

Par «armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Dans le cas d'une texture multicouche ou 2D, la couture ou l'implantation sera favorablement réalisée avec pour objectif de renforcer le matériau dans son épaisseur et ainsi limiter la sensibilité au délaminage. Dans ce cas, toute la surface de la préforme pourra être cousue ou implantée d'aiguilles.

La couture ou l'implantation d'aiguilles pourra également être utilisée pour assembler entre elles des strates de la texture. Ce sera en particulier le cas, lors d'un mode d'élaboration à partir de textures multicouches.

Si la technique AFP est appliquée, des rouleaux ou bandes de fils enduits d'un liant - a priori organique - ou pré-imprégné (texture fibreuse + résine, donc) seront acheminés jusqu'à la tête du robot. Les fibres resteront tendues entre le rouleau ou la bande et la tête du robot.

S'il est à base de résine thermo-formable, le rouleau ou la bande, une fois au niveau de la tête du robot sera chauffé, permettant un écoulement de la résine - modification de ses caractéristiques physico-chimique - qui deviendra peu visqueuse. Le rouleau ou la bande acquerra ainsi une propriété d'adhésivité et se collera bien au moule de mise en forme finale prévu à l'étape b) précitée. Un cylindre de compactage viendra alors appliquer le rouleau ou la bande contre le moule. Ce compactage permettra d'éviter la formation d'interstices et de porosité. Puis le rouleau ou la bande sera découpé aux contours du moule par la tête du robot pourvu d'outils de découpe. La cuisson et la polymérisation pourront se faire ensuite à l'autoclave. Ce procédé apparaît comme une forme robuste de drapage.

Les fibres continues constitutives de la structure fibreuse seront a priori des fibres réfractaires, c'est-à-dire des fibres en céramique, par exemple en carbure de silicium (SiC), des fibres en carbone ou des fibres en un oxyde réfractaire, par exemple en alumine (Al2O3). Les fibres peuvent être également des fibres de verre ou métalliques. Le matériau composite réalisé aura alors une tenue structurale qui sera directement dépendante de l'entrelacement des fibres entre elles.

En alternative à une résine thermo-formable comme précité, on pourra utiliser une résine thermodurcissable. Une fois ainsi imprégnée, la structure fibreuse sera compactée en forme afin d'être ajustée à la forme, ou géométrie, intermédiaire retenue, en augmentant alors le taux de fibre dans la forme définie par le moule correspondant.

Quoi qu'il en soit, cette géométrie intermédiaire devra pouvoir être développable de la géométrie finale et être donc apte, avec un minimum de décadrage, à être post-formée à la géométrie finale souhaitée.

La géométrie finale sera aussi préférentiellement de révolution.

La géométrie de la préforme fibreuse à développer par post-formage pourra être obtenue à partir d'un logiciel de CAO, via des mesures de périmètres à différentes position axiale de pièce. On construira ainsi une nouvelle géométrie en se donnant comme règle de maximiser les rayons.

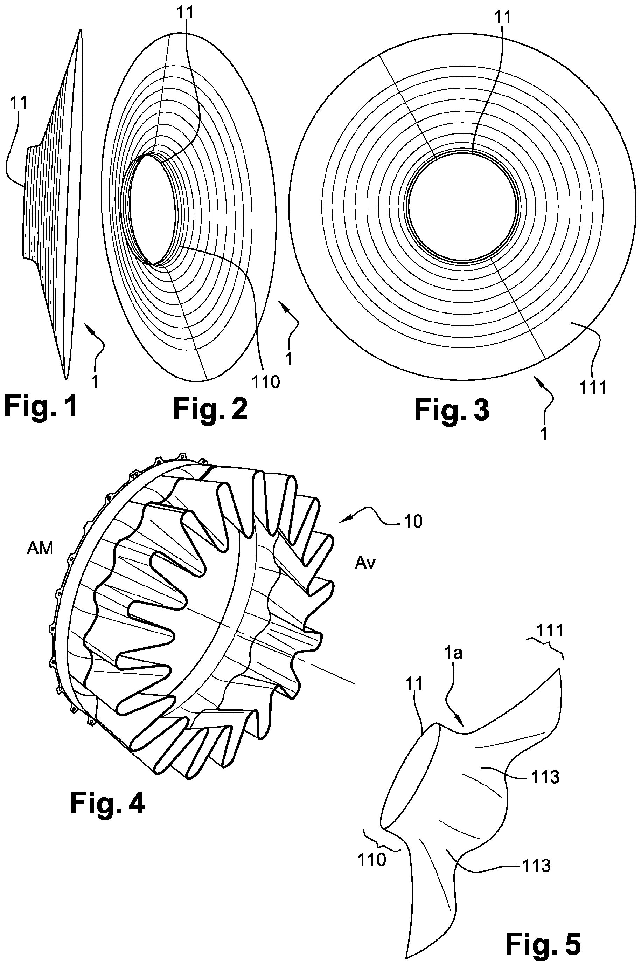

Ainsi, et comme le schématisent les figures 1-4 :
- a) on partira initialement d'une préforme fibreuse 1 comprenant l'une parmi une résine thermo-formable et une résine thermodurcissable, dans une géométrie intermédiaire de révolution (figures 1-3) essentiellement développable par post-formage vers la géométrie finale de la pièce 10 à réaliser (figure 4),
- b) puis, au moins par exploitation du caractère thermo-formable ou thermodurcissable de la résine, il suffira de post-former la géométrie intermédiaire 1 pour lui faire atteindre la géométrie finale 10.

La géométrie intermédiaire est plus simple que la géométrie finale : cette géométrie intermédiaire est a priori de révolution (voir ci-avant) et dépourvue de lobes, ou avec des lobes de faibles amplitudes et/ou de grands rayons, comme indiqué ci-après. De manière simplifiée, le périmètre d'une section de la préforme
- géométrie intermédiaire - sera égal au périmètre d'une section de la géométrie finale.

A priori, la préforme 1 présentera sensiblement une forme en pavillon de soubassophone (comme illustré figures 1-3), donc sans lobe.
Toutefois, selon le développé souhaité entre l'amont (AM) et l'aval (AV) du mélangeur 10 à fabriquer, la forme intermédiaire à draper, repérée 1a figure 5, pourrait présenter, comme dans l'hypothèse ci-avant, une extrémité amont 11 de section circulaire, sur une base cylindrique 110, se déployant vers l'aval (AV), globalement comme un pavillon de soubassophone 111, mais avec, en zone 111, des lobes 113 présentant de grands rayons, la rendant compatible avec les procédés AFP, couture ou implantation d'aiguilles. Typiquement, les rayons seront supérieurs à 150mm et de préférence à 200mm, encore préférentiellement supérieurs à 250mm pour autoriser le passage d'une tête de robot d'AFP. Pour une tête de couture, ou une tête d'implantation d'aiguilles les rayons pourront être plus faibles : rayons supérieurs à 40mm et de préférence à 45mm, encore préférentiellement supérieurs à 50mm. Elaborer une telle préforme 1a sur un premier moule 20, comme présenté ci-après, amènera à utiliser un moule présentant de tels grands rayons.

Parmi les avantages du choix d'un procédé AFP, on notera qu'il permet:
- de spécifier librement l'orientation des mèches,
- d'effectuer un choix d'orientations des mèches, facilitant ainsi la déformation de la texture entre les géométries intermédiaire et finale,
- de partir et de maintenir une texture monobloc entre une partie amont cylindrique 110 et une partie aval 111 avec ses lobes,
- une continuité de matière, sans ressaut de matière très préjudiciable pour l'aérodynamisme (écoulement de l'air à la surface de la pièce),
- de ne pas à prévoir d'éventuelles liaisons entre diverses parties (110, 111 monoblocs), pas de liaison de fixation, pas de recouvrement entre strates.

Ainsi les perspectives de gain de masse sont intéressantes.

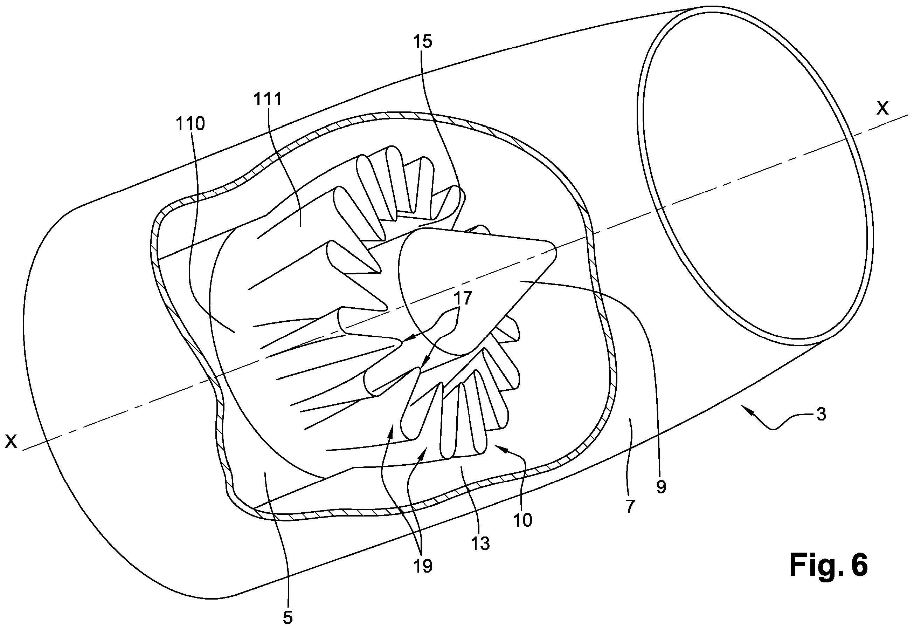

Concernant le mélangeur 10 à fabriquer, la figure 6 représente schématiquement, en perspective et en écorché, une tuyère 3 à flux confluents de turbomachine aéronautique à double flux.

La tuyère 3 est typiquement formée d'un capot primaire 5, d'un capot secondaire 7 et d'un corps central 9 qui sont tous centrés sur l'axe longitudinal X-X de la tuyère.

Le capot primaire 5 s'étend selon l'axe longitudinal X-X. Le corps central 9 est disposé concentriquement à l'intérieur du capot primaire 5 et se termine par une partie sensiblement conique.

Le capot secondaire 7, ici de forme sensiblement cylindrique, entoure le capot primaire 5 et lui est concentrique. Le capot secondaire 7 s'étend longitudinalement vers l'aval au-delà du capot primaire 5.

Sur l'exemple, le corps central 9 est de type externe, c'est à dire que le corps central s'étend longitudinalement au-delà du bord de fuite du capot primaire 5. Une tuyère à flux confluents de type interne pourrait toutefois aussi être concernée.

L'assemblage concentrique précité permet de définir, d'une part entre les capots primaire 5 et secondaire 7, un premier canal annulaire 13 pour l'écoulement d'un flux gazeux extérieur issu de la turbomachine et appelé flux secondaire ou flux froid, et d'autre part, entre le capot primaire 5 et le corps central 9, un second canal annulaire 15 pour l'écoulement d'un flux gazeux intérieur issu de la turbomachine et appelé flux primaire ou flux chaud.

Les flux primaire et secondaire s'écoulant dans ces deux canaux annulaires 13,15 se mélangent entre eux au niveau du mélangeur 10 fixé à l'extrémité aval du capot primaire 5.

Le mélangeur 10 est ici du type marguerite. Il présente une partie 110 sensiblement cylindrique d'axe de révolution X-X se développant en aval et s'y terminant par une partie 111 sensiblement sinusoïdale circonférentiellement, en présentant là des lobes radialement intérieurs 17 et radialement extérieurs 19.

Les lobes radialement intérieurs 17 et extérieurs 19 sont disposés en alternance et régulièrement répartis sur toute la circonférence du mélangeur 10.

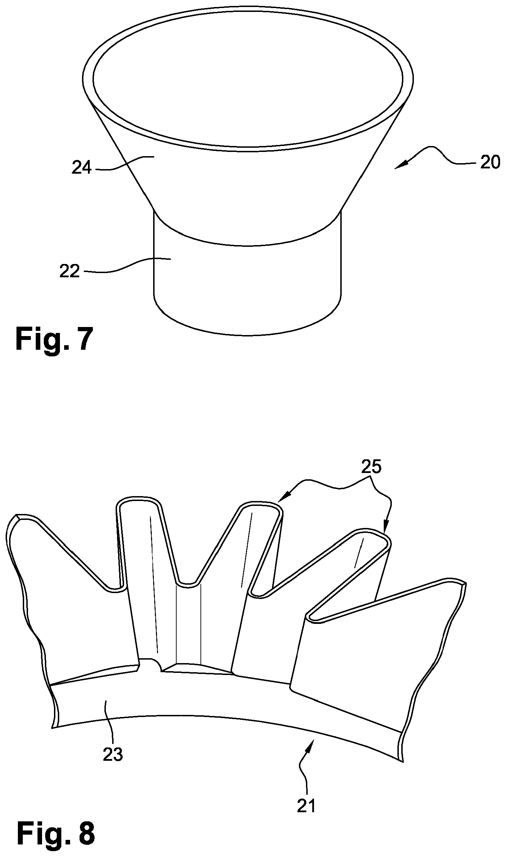

Ceci précisé, pour, dans l'invention, fabriquer en matériau composite un tel mélangeur, en série, à coûts contenus, avec l'atteinte de la précision de forme requise, on va préférentiellement exploiter le caractère thermo-formable ou thermodurcissable de la résine utilisée, de sorte qu'à l'étape b) de post-formage :
- on chauffe la préforme fibreuse 1 (ou 1a),
- et on met sous pression cette préforme fibreuse, après sa mise en contact avec un moule, tel 21, à la géométrie finale de la pièce 10 (voir figure 8).

De fait, si la préforme fibreuse de renfort présente une partie amont annulaire qui s'évase vers l'aval par une partie devant former une jupe multilobée, comme repéré 1 ou 1a, ses éléments constitutifs pourront avoir été assemblés entre eux et conformés d'abord sur le premier moule 20 de la figure 7, puis finis sur le second moule 21 de la figure 8.

Le premier moule 20 présentera alors une partie amont annulaire 22 s'évasant vers l'aval, en l'espèce en présentant une seconde partie 24 sensiblement comme un pavillon de soubassophone.

Le second moule 21 présentera quant à lui une forme correspondant à celle de la structure à lobes 10 à fabriquer, avec donc une partie annulaire 23, correspondant à la partie annulaire 110 de la structure à lobes finale (et a priori à la partie amont annulaire 22 du premier moule 20) et une partie multilobée 25 correspondant à la jupe multilobée 111 (lobes 17 et 19 figure 6).

Si la forme concernée avait pu par exemple être inscrite dans un tronc de cône, et donc par exemple et notamment être sans partie annulaire cylindrique, avec pour résultat une pièce sans partie annulaire 110, on aurait toutefois pu partir d'une texture fibreuse bidimensionnelle, plate, que l'on aurait simplement mise en forme avec de faibles décadrages.

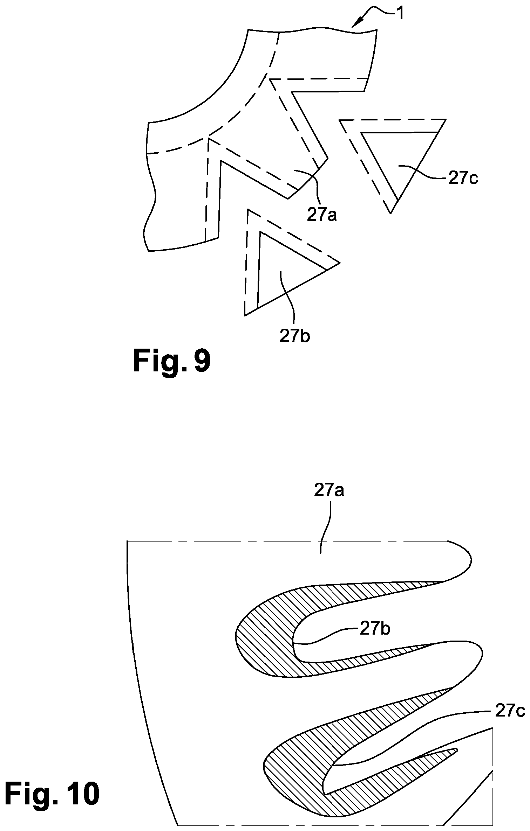

Les figures 9,10 montrent un exemple de couture entre elles de strates de fils enduits de liant ou pré-imprégnés, multicouches 27a,27b,27c utilisées pour la fabrication du mélangeur 10. Figure 9, il s'agit de coutures de ces strates, en réalisation sur la préforme 1, suivant la géométrie initiale. Les pointillés symbolisent les coutures. Figure 10, on retrouve les éléments cousus 27a,27b,27c, sur le mélangeur 10, à la géométrie finale, avec les lobes.

Dans ce qui suit, on va prendre l'exemple d'une utilisation de résine thermo-formable pour réaliser la préforme 1 ou 1a.

On peut citer comme exemples : PVA, PEG, PVP, PMMA, ..., et comme résine thermodurcissable : phénolique, polysiloxane, ...

D'abord, cette résine sera favorablement soit fugitive (donc à capacité à se vaporiser sous une température supérieure à 900°C et de préférence entre 300°C et 400°C) soit soluble dans un solvant, de sorte qu'elle disparaisse au moins essentiellement avant la fin du procédé, évitant ainsi un traitement thermique spécifique.

Si la préforme est ensuite obtenue par AFP voie sèche (comme évoqué dans EP2949449), on va favorablement exploiter la fluidité et déformabilité de la résine (appelée aussi binder -liant-) de sorte que le robot de pose AFP place automatiquement les fibres afin de permettre que la préforme puisse être d'abord plaquée sur le moule 20, puis finisse avec la forme attendue du mélangeur via le second moule 21: en chauffant la préforme au-delà de la température de transition vitreuse de la résine (Tv, anglais ; Tg pour glass), représentant l'intervalle de température dans lequel la matière passe d'un état caoutchouteux à un état vitreux, solide (rigide), la préforme va se ramollir, ce qui va permettre de la déformer jusqu'à obtenir la géométrie finale souhaitée.

De fait, pour arriver à la préforme fibreuse 1 ou 1a dans cette configuration géométrique intermédiaire de révolution, la préforme aura favorablement été réalisée sur un premier outillage à géométrie ne présentant que de grands rayons. Typiquement on peut considérer que pour utiliser une tête de robot d'AFP, il faut des rayons supérieurs à 150mm et de préférence à 200mm, encore préférentiellement supérieurs à 250mm. Pour une tête de couture, ou une tête d'implantation d'aiguilles les rayons sont plus faibles : rayons supérieurs à 40mm et de préférence à 45mm, encore préférentiellement supérieurs à 50mm. Avec ces contraintes, le moule 20 pourrait présenter la forme montrée figure 5, pour réaliser la préforme fibreuse 1a.

Une fois la préforme réalisée, elle sera transférée sur le nouvel outillage à la forme de la géométrie finale de la pièce à fabriquer, comme le moule 21 de la figure 8. Lors de cette mise en forme de la préforme, son réchauffement, par air chaud ou moule 21 chauffant par exemple, sera suivi d'opérations de marouflage qui vont assurer la mise en contact intime de la préforme ramollie sur le moule (avec contre-moule si nécessaire). L'ensemble sera ensuite remis à la température ambiante et le cycle de fabrication de la pièce pourra alors se poursuivre. Dans le cas d'utilisation d'un pré-imprégné cousu ou implanté avec des aiguilles, une polymérisation de la résine sera réalisée pour figer la géométrie finale de la pièce.

En prenant pour exemple de pièce celle des figures 1-3 et 4, un point critique réside donc dans la maitrise de la transformation de la préforme, repérée donc 1 dans exemple, de son état intermédiaire des figures 1-3 vers son état final de la figure 4 : stade de la pièce finale plaquée sur le moule 21, à la géométrie finale.

Ainsi est-il prévu, dès lors que ladite configuration géométrique intermédiaire ne sera effectivement pas totalement (ou intégralement) développable vers la géométrie finale par post-formage, comme dans l'exemple ci-dessus, que l'étape b) précitée de post-formage comprenne potentiellement une étape de génération de décadrages locaux de ladite configuration géométrique intermédiaire de la préforme fibreuse, avant de la post-former, ou pendant le post-formage.

De fait, il y aura alors, numériquement - par voie informatique - génération de décadrages locaux, donc de déformations locales de la texture fibreuse pour l'amener à une géométrie lui permettant d'être appliquée totalement (ou intégralement) sur le moule 21 dans l'exemple. En effet, il est en pratique fréquent qu'il ne soit pas (suffisamment) possible de déformer des fibres orthogonales dans une dite texture fibreuse (de les décadrer) au-delà de 45°. Le décadrage consiste alors à changer les angles entre la chaîne et la trame initialement de 90° à des angles compris entre 35° et 125°), ce qui est typiquement obtenu quand on étire un tissu selon au moins une direction non parallèle à une direction des fibres de ladite texture, comme il y est fait référence dans WO2014044963 ou WO2014154981.

De fait, le décadrage des profils géométriques pourra donc comprendre des déformations induites sur un profil géométriques 2D le mettant en forme pour obtenir un profil géométrique 3D.

On préfèrera toutefois que ces décadrages locaux soient aussi faibles que possible ; de là l'importance de la technique de réalisation de la structure fibreuse et du choix de la préforme de départ (des figures 1-3 dans l'exemple).

Une importance est à ce sujet aussi à noter dans le choix combiné des fibres et de la résine du composite de la préforme fibreuse.

C'est ainsi que, pour une bonne ductilité et résistance à la cassure, lors du processus de fabrication, il est aussi proposé que ce composite soit de type CMC, avec des fibres contenant de l'alumine et une matrice d'alumine, ou du carbone ou du carbure de silicium et une matrice en carbure.

Est fourni ci-après un exemple de réalisation d'une préforme obtenue par AFP, via une texture fibreuse initiale à résine (ou liant) thermo-formable.

Dans ce cas, le caractère thermo-formable du liant est exploité. A cette fin, sa formulation et son taux de fibres sont optimisés pour conférer aux fibres (ou mèches) un comportement permettant à la fois d'assurer :
- un drapage automatique des mèches/de la préforme (besoin d'un compromis flexibilité/rigidité des mèches pour assurer le drapage),
- un collage (assisté thermiquement sur la tête de drapage du robot) des mèches entre elles pour une tenue de la préforme lui permettant d'être manipulable,
- un thermoformage à une température inférieure à 200°C et une manipulation de la préforme après thermoformage,
- un liant fugitif ou soluble dans un solvant de manière à le faire disparaître » avant injection de la matrice et ne pas bloquer la colonisation intra fil des poudres (idéalement, solubilité à l'eau chaude ; le pH de la solution de désensimage peut être modulable afin de faciliter l'élimination du liant).

### Exemples de formulations de liant :

| | **PVA (alcool Polyvinylique) (%m)** | **PVP (Pyrrolidone Polyvinylique) (%m)** | **PEG (Poly Ethylene glycol) (%m)** | **Hydrosoluble** |
|---|---|---|---|---|
| **Exemple 1 - liant** | **70-99** | | **1-30** | **Oui** |
| **Exemple 2 - liant** | | **70-99** | **1-30** | **Oui** |
| **Exemple 3 - liant** | | | **100** | **Oui** |
| **Exemple 4 - liant** | **Autres combinaisons de ces 3 élements** | | | **oOi** |
| **Exemple 5 - liant** | **Formulation à base de cire, dextrine de maïs...** | | | |

### Exemples de taux de liant :

| | **Liant** **- %m minimum -(rapporté à la masse totale du liant + mèches)** | **Liant** **- %m maximum- (rapporté à la masse totale du liant + mèches)** | | |
|---|---|---|---|---|
| **Exemple 1** | **5** | **40** | | |
| **Exemple 2** | **15** | **35** | | |
| **Exemple 3 - préférentiellement** | **15** | **25** | | |

Avant élimination du liant, la préforme est placée dans un outillage qui maintient les fibres entre les étapes d'élimination du liant et de densification par une matrice. Cet outillage peut être mâle ou femelle et dans ce cas la préforme sera plaquée dans l'outillage par une poche à vide. L'outillage peut également être mâle / femelle avec un entrefer égal à l'épaisseur de la pièce à réaliser. La densification par une matrice pourra comprendre des étapes d'injection d'une barbotine élaborée à partir de charges céramiques dispersées dans un solvant, puis de séchage et enfin de frittage. Un tel procédé est décrit dans FR3030505 A1, WO2016102839 ou encore WO2017060601.

A l'issue de l'étape b) de thermoformage, la préforme est donc placée dans un outillage avant d'éliminer le liant. De façon judicieuse, cet outillage pourra également permettre d'injecter tout ou partie de la matrice de la pièce et permettre ainsi de figer la géométrie finale.

En d'autres termes, après avoir été réalisée initialement sur le premier moule 20, la pièce 5 de l'exemple retenu sera déformée sur le deuxième moule 21 à lobes. Une fois cette mise en forme finale faite, on pourra soit placer un moule mâle ou bien une bâche par-dessus, et mener une opération pour retirer la résine ou le liant (typiquement soit thermiquement, soit par eau chaude). Une fois ceci terminé, les fibres seront « propres » mais très (trop) souples. Sans démouler, on passera donc à l'étape d'injection de barbotine (moulage par injection basse pression de résine liquide, proche procédé RTM, moulage par injection basse pression de résine liquide) ou de densification (typiquement en four).

Dans le cas de réalisation d'une pièce en matériau oxyde / oxyde, la préforme pourra être réalisée à partir de fils d'oxyde tels que Nextel 610 (TM) ou Nextel 720 (TM) par exemple. La matrice pourra être mise en œuvre selon un procédé d'injection/filtration d'une barbotine chargée d'une poudre d'oxyde, telle qu'alumine, silice ou zircone par exemple, ou d'un mélange de poudres d'oxydes. Un tel procédé d'injection est décrit dans WO2017060601 et dans WO2016102839.

De façon générale, la matrice pourra donc être un oxyde réfractaire, mais pourrait être une céramique et le liant être du PVA, PVP, PEG, ...

Suit maintenant un exemple de réalisation d'une préforme par pré-imprégné à texture 2D ou multicouches cousu ou implanté d'aiguilles:

Le caractère thermoformable de la résine du pré-imprégné est exploité. La formulation et le taux de résine sont optimisés, de manière à conférer un comportement idéal aux strates, permettant d'assurer, à la fois :
- le drapage des strates (besoin d'un compromis flexibilité/rigidité des strates pour assurer le drapage),
- la couture ou l'implantation d'aiguilles pour assurer un renforcement dans une direction orthogonale au plan des strates,
- le thermoformage à une température inférieure à 200°C et la manipulation de la préforme après thermoformage.

Classiquement, des résines phénoliques pourront être utilisées comme précurseur d'une matrice carbone. Des résines polysiloxane, polysilazane ou polycarbosilane pourront être utilisées comme précurseur d'une matrice carbure.

A l'issue du thermoformage de la préforme, la polymérisation de la résine est réalisée, puis cette dernière est pyrolysée pour transformer le précurseur organique en carbone ou céramique. La densification totale de la pièce est alors réalisée par PIP (Pyrolyse et Imprégnation de Polymères), injection de charges, CVI (densification par voie gazeuse) ou combinaison d'un de ces procédés.

## Revendications

1. Procédé de réalisation en matériau composite d'une structure à lobes de mélangeur (10) de flux de turbine à gaz circulant de l'amont vers l'aval, la structure à lobes présentant une géométrie finale et comprenant une partie formant jupe multilobée (111) ayant une pluralité de lobes (17,19) répartis autour d'un axe longitudinal (X) de la structure à lobes, le procédé étant **caractérisé en ce que** :
- il comprend comme étapes ;
a) la réalisation d'une préforme fibreuse (1,1a) comprenant l'un parmi une résine thermo-formable et une résine thermodurcissable, dans une configuration géométrique intermédiaire essentiellement développable par post-formage vers la géométrie finale de la pièce (10) à réaliser, la géométrie intermédiaire étant plus simple que ladite géométrie finale,
b) au moins par exploitation du caractère thermo-formable ou thermodurcissable de la résine, post-former la configuration géométrique intermédiaire de révolution, en la déformant, pour lui faire atteindre la géométrie finale, et
- à l'étape b), l'exploitation du caractère thermo-formable ou thermodurcissable de la résine comprend un chauffage de la préforme fibreuse (1,1a), et une mise sous pression de ladite préforme fibreuse, après sa mise en contact avec un second moule (21) à la géométrie finale de la pièce (10) à réaliser, et
- avant la mise en contact avec ledit second moule (21) à la géométrie finale de la pièce (10) à réaliser, ladite réalisation de la préforme fibreuse (1,1a) s'opère sur un premier moule (20).

2. Procédé selon la revendication 1, dans lequel, une résine thermo-formable étant utilisée à l'étape a), la résine est fugitive ou soluble dans un solvant, de sorte qu'elle disparaît au moins essentiellement avant la fin du procédé.

3. Procédé selon l'une des revendications précédentes, dans lequel, à l'étape a), la préforme fibreuse (1,1a) réalisée comprend une partie amont annulaire (110) qui s'évase vers l'aval.

4. Procédé selon l'une des revendications précédentes, dans lequel, à l'étape a), la préforme fibreuse (1) réalisée présente une forme qui s'évase, sensiblement comme un pavillon de soubassophone.

5. Procédé selon la revendication 3 ou 4, dans lequel on définit :
- le second moule (21) à la géométrie finale de la pièce (10) à réaliser, de sorte qu'il soit multilobé en présentant ainsi, circonférentiellement, une succession de lobes (17,19), autour d'un axe (X-X) devant correspondre à l'axe de la structure à lobes, et
- la configuration géométrique intermédiaire de sorte qu'avec son s'évasement elle soit apte à être post-formée au contact dudit second moule (21) à la géométrie finale de la pièce (10) à réaliser.

6. Procédé selon l'une des revendications précédentes, dans lequel, la préforme fibreuse (1,1a) est en un matériau composite comprenant, de sorte à obtenir une structure à lobes en CMC:
- des fibres contenant de l'alumine et une matrice d'alumine,
- ou des fibres contenant du carbone ou du carbure de silicium et une matrice en carbure.

7. Procédé selon l'une des revendications précédentes, dans lequel, la réalisation de la préforme (1,1a) à l'étape a) s'opère par un procédé AFP.

8. Procédé selon l'une des revendications précédentes, dans lequel, à l'étape a), la préforme fibreuse (1,1a) est réalisée à partir de strates de fils enduits d'un liant ou pré-imprégné appartenant à une texture multicouche ou à un tissu 2D, et est cousue ou implantée d'aiguilles.

9. Procédé selon l'une des revendications précédentes, dans lequel, la configuration géométrique intermédiaire n'étant pas totalement développable vers la géométrie finale par post-formage, l'étape b) comprend une étape de génération de décadrages locaux de ladite configuration géométrique intermédiaire de la préforme fibreuse (1,1a) avant de la post-former ou pendant qu'on la post-forme.

## Patentansprüche

1. Verfahren zur Herstellung einer gelappten Struktur aus Verbundmaterial für einen Strömungsmischer (10) einer Gasturbine mit von stromaufwärts nach stromabwärts strömendem Gas, wobei die gelappte Struktur eine Endgeometrie aufweist und einen mehrfach gelappten Schürzenabschnitt (111) mit einer Vielzahl von Lappen (17, 19) enthält, die um eine Längsachse (X) der gelappten Struktur verteilt sind,
wobei das Verfahren **dadurch gekennzeichnet ist, dass**
- es die folgenden Schritte umfasst:
a) Herstellen einer Faservorform (1, 1a), die eines aus wärmeformbarem Harz und wärmehärtendem Harz enthält, in einer geometrischen Zwischengestalt, die im Wesentlichen durch Nachformen zur Endgeometrie des herzustellenden Teils (10) entwickelbar ist, wobei die Zwischengeometrie einfacher ist als die Endgeometrie,
b) zumindest durch Nutzung der Wärmeformbarkeit bzw. Wärmehärtbarkeit des Harzes, Nachformen der geometrischen Rotations-Zwischengestalt, indem sie verformt wird, um sie zur Endgeometrie zu bringen,
- in Schritt b) die Nutzung der Wärmeformbarkeit bzw. Wärmehärtbarkeit des Harzes ein Erhitzen der Faservorform (1, 1a) und eine Druckbeaufschlagung der Faservorform umfasst, nachdem sie mit einer zweiten Pressform (21) mit der Endgeometrie des herzustellenden Teils (10) in Kontakt gebracht wurde, und
- vor dem Inkontaktbringen mit der zweiten Pressform (21) mit der Endgeometrie des herzustellenden Teils (10) die Herstellung der Faservorform (1, 1a) an einer ersten Pressform (20) erfolgt.

2. Verfahren nach Anspruch 1,
wobei bei einem in Schritt a) verwendeten wärmeformbaren Harz das Harz flüchtig oder in einem Lösungsmittel löslich ist, so dass es vor dem Ende des Verfahrens zumindest im Wesentlichen schwindet.

3. Verfahren nach einem der vorhergehenden Ansprüche,
wobei in Schritt a) die hergestellte Faservorform (1, 1a) einen ringförmigen stromaufwärtigen Abschnitt (110) enthält, der sich stromabwärts aufweitet.

4. Verfahren nach einem der vorhergehenden Ansprüche,
wobei in Schritt a) die hergestellte Faservorform (1) eine Form aufweist, die sich im Wesentlichen wie der Schalltrichter eines Sousaphons aufweitet.

5. Verfahren nach Anspruch 3 oder 4, wobei
- die zweite Pressform (21) mit der Endgeometrie des herzustellenden Teils (10) so festgelegt wird, so dass sie mehrfach gelappt ist und somit in Umfangsrichtung eine Folge von Lappen (17, 19) um eine Achse (X-X) aufweist, die der Achse der gelappten Struktur entsprechen soll, und
- die geometrische Zwischengestalt so festgelegt wird, dass sie mit ihrer Aufweitung geeignet ist, im Kontakt mit der zweiten Pressform (21) mit der Endgeometrie des herzustellenden Teils (10) nachgeformt zu werden.

6. Verfahren nach einem der vorhergehenden Ansprüche,
wobei die Faservorform (1, 1a) aus einem Verbundmaterial besteht, das zum Erreichen einer gelappten Struktur aus CMC enthält:
- Fasern, die Aluminiumoxid und eine Aluminiumoxidmatrix enthalten,
- oder Fasern, die Kohlenstoff oder Siliziumkarbid und eine Karbidmatrix enthalten.

7. Verfahren nach einem der vorhergehenden Ansprüche,
wobei die Herstellung der Vorform (1, 1a) in Schritt a) durch ein AFP-Verfahren erfolgt.

8. Verfahren nach einem der vorhergehenden Ansprüche,
wobei in Schritt a) die Faservorform (1, 1a) aus Fadenschichten hergestellt wird, die mit einem Bindemittel oder Prepreg beschichtet sind, das zu einer mehrschichtigen Textur oder einem 2D-Gewebe gehört, und genäht oder genadelt wird.

9. Verfahren nach einem der vorhergehenden Ansprüche,
wobei dadurch, dass die geometrische Zwischengestalt nicht vollständig durch Nachformen in die Endgeometrie entwickelbar ist, Schritt b) einen Schritt der Erzeugung von bereichsweisen Offsets der geometrischen Zwischengestalt der Faservorform (1, 1a) vor dem Nachformen oder während des Nachformens umfasst.

## Claims

1. A method for manufacturing a composite material structure for a lobed structure of a gas turbine flow mixer (10), said flow flowing from upstream to downstream, the lobed structure having a final geometry and comprising a multilobed skirt portion (111) having a plurality of lobes (17, 19) distributed around a longitudinal axis (X) of the lobed structure, the method being **characterized in that**:
- it comprises:
a) manufacturing a fibrous preform (1, 1a) comprising one of a thermoformable resin and a thermosetting resin, in a configuration having an intermediate geometry essentially developable by post-forming to the final geometry the part (10) to be manufactured, the intermediate geometry being simpler than said final geometry,
b) at least by exploiting the thermoformable or thermosetting nature of the resin, post-forming the intermediate geometric configuration, which is of revolution, by deforming it, so that it reaches the final geometry,
- in step b), exploiting the thermoformable or thermosetting nature of the resin comprises heating the fibrous preform (1, 1a) and pressurizing said fibrous preform, after it has been brought into contact with a second mould (21) having the final geometry of the part (10) to be manufactured, and,
- before the fibrous preform is brought into contact with said second mould (21) having the final geometry of the part (10) to be manufactured, said manufacturing of the fibrous preform (1, 1a) is carried out on a first mould (20).

2. A method according to claim 1, wherein a thermoformable resin being used in step a), the resin is fugitive or soluble in a solvent so that it disappears at least essentially before the end of the method.

3. Method according to one of the preceding claims, wherein in step a) the fibrous preform (1, 1a) produced comprises an annular upstream portion (110) which flares out in a downstream direction.

4. Method according to one of the preceding claims, wherein in step a) the fibrous preform (1) produced has a shape which flares out, substantially like a sousaphone horn.

5. Method according to claim 3 or 4, wherein:
- the second mould (21) having the final geometry of the part (10) to be manufactured is defined in such a way that it is multilobed, thus presenting, circumferentially, a succession of lobes (17, 19), around an axis (X-X) which must correspond to the axis of the lobed structure, and
- the intermediate geometrical configuration is defined so that, with said flare, it is suitable for being post-formed on contact with said second mould (21) having the final geometry of the part (10) to be manufactured.

6. Method according to one of the preceding claims, wherein the fibrous preform (1, 1a) is of a composite material comprising, so as to obtain a CMC-lobed structure:
- fibres containing alumina and an alumina matrix, or
- fibres containing carbon or silicon carbide and a carbide matrix.

7. Method according to one of the preceding claims, wherein the preform (1, 1a) in step a) is produced by an AFP method.

8. Method according to one of the preceding claims, wherein in step a) the fibrous preform (1, 1a) is manufactured from layers of binder-coated yarns or prepreg belonging to a multilayer texture or 2D fabric and is sewn or implanted with needles.

9. Method according to one of the preceding claims, wherein the intermediate geometrical configuration not being fully developable to the final geometry by post-forming, step b) comprises a step of generating local offsets of said intermediate geometrical configuration of the fibrous preform (1, 1a) before or while post-forming said fibrous preform.
